# FASCICULE DE BREVET EUROPEEN

(11) **EP 1 989 506 B1**
(45) Date de publication et mention de la délivrance du brevet: **23.12.2015**
(21) Numéro de dépôt: 07731042.3
(22) Date de dépôt: 26.02.2007
(51) Int. Cl.: G01B 11/08

(54) **PROCEDE ET SYSTEME DE MESURE DE DIAMETRE, CHAINE DE MONTAGE UTILISANT CE SYSTEME**
VERFAHREN UND SYSTEM ZUM MESSEN EINES DURCHMESSERS UND MONTAGESTRASSE, DIE DIESES SYSTEM NUTZT
METHOD AND SYSTEM FOR MEASURING A DIAMETER, AND ASSEMBLY LINE EMPLOYING THIS SYSTEM

(30) Priorité: 27.02.2006 FR 0601694
(43) Date de publication de la demande: 12.11.2008
(73) Titulaire: STAUBLI FAVERGES, 74210 FAVERGES (FR)
(72) Inventeur: JACQUOT, Claude, F-74410 Saint Eustache (FR)
(74) Mandataire: Myon, Gérard Jean-Pierre
(86) Numéro de dépôt international: PCT/FR2007/000338
(87) Numéro de publication internationale: WO 2007/096533

(56) Documents cités:
- JP-A- 7 167 790
- US-A1- 2003 189 713
- US-B1- 6 289 600
- US-B1- 6 332 265

## Description

La présente invention concerne un procédé et un système de mesure de diamètre, et une chaîne de montage utilisant ce système.

Il existe des procédés de mesure du diamètre d'une piste circulaire d'une pièce comportant :
a) une étape de déplacement de la pièce le long d'une trajectoire de mesure,
b) lors du déplacement de la pièce le long de la trajectoire de mesure, une étape de mesure, sans contact avec la pièce, d'au moins une grandeur fonction du diamètre de la piste circulaire,
c) une étape de détermination du diamètre de la piste circulaire à partir des grandeurs mesurées en plusieurs points de mesure le long de la trajectoire de mesure.

Dans les procédés existants, un moteur pas à pas est utilisé pour déplacer la pièce le long de la trajectoire de mesure. Ainsi, la pièce est déplacée d'un pas prédéterminé puis arrêtée. Lorsque la pièce est arrêtée, l'étape b) est exécutée. Ensuite, la pièce est de nouveau déplacée d'un pas prédéterminé puis arrêté à nouveau pour exécuter une nouvelle fois l'étape b). Ce mode opératoire est réitéré le long de toute la trajectoire de mesure.

Ce procédé donne satisfaction. Toutefois, il est souhaitable d'améliorer encore plus la précision de la mesure du diamètre et surtout de permettre une mesure plus rapide.

Le document US6289600 divulgue un procédé de mesure du diamètre d'un tuyau.

L'invention vise à satisfaire ce souhait en proposant un procédé de mesure plus précis et plus rapide du diamètre d'une piste circulaire d'une pièce.

L'invention a donc pour objet un tel procédé tel que défini dans la revendication 1 dans d'une embase fixe et d'un bras manipulateur articulé autour d'au moins deux axes, l'extrémité du bras manipulateur étant équipée d'un organe de préhension propre à saisir la pièce, et dans lequel lors de l'étape a) le robot déplace continûment la pièce avec une vitesse instantanée qui n'est jamais nulle le long de la trajectoire de mesure et une accélération instantanée qui ne change jamais de signe le long de la trajectoire de mesure.

Dans le procédé proposé ci-dessus, la pièce est continûment déplacée le long de la trajectoire de mesure avec une accélération instantanée qui ne change jamais de signe. Dès lors, sous l'effet de cette accélération, la cinématique est maintenue tout au long de la trajectoire dans une configuration dans laquelle les jeux sont rattrapés. Dans ces conditions, les mesures successives ont une évolution régulière qui confère une plus grande précision aux interpolations effectuées lors de l'étape c).

Lors de l'étape de mesure, au moins deux grandeurs sont simultanément mesurées avec des capteurs respectifs à chaque point de mesure le long de la trajectoire de mesure, chacune de ces grandeurs est représentative de la distance qui sépare le capteur qui l'a mesuré de la piste circulaire selon une direction de mesure, les directions de mesure utilisées pour mesurer ces deux grandeurs étant opposées et la distance entre les capteurs étant maintenue constante

. Les modes de réalisation de ce procédé peuvent comporter une ou plusieurs des caractéristiques suivantes:
- l'étape a) est réalisée à l'aide d'un robot dont la masse du bras articulé est supérieure ou égale à 20 kg ;
- lors de l'étape a) seule une articulation du robot est commandée ;
- l'étape b) est réalisée à l'aide d'au moins un capteur comportant:
   - une source d'un faisceau lumineux collimaté propre à projeter un motif lumineux sur la piste circulaire,
   - une caméra propre à acquérir une image du motif lumineux projeté sur la piste circulaire, et
   - à l'aide d'un processeur propre à traiter les images acquises pour en déduire la grandeur fonction du diamètre de la piste circulaire ;
- l'étape a) est réalisée avec un bras dont l'erreur statique de positionnement par rapport à une position donnée est strictement supérieure à l'erreur maximale admissible sur la mesure du diamètre de la piste circulaire, l'erreur statique de positionnement étant l'erreur maximale obtenue entre une position cible pour l'organe de préhension et une position à laquelle l'organe de préhension s'arrête réellement lorsque le robot cherche à placer cet organe sur la position cible.

Ces modes de réalisation du procédé présentent en outre les avantages suivants :
- mesurer simultanément les grandeurs qui sont fonctions du diamètre, permet d'accroître la précision de la mesure du diamètre puisque la position d'un capteur vis-à-vis de l'autre au moment où la mesure est réalisée peut être connue avec une grande précision,
- utiliser un bras de robot dont la masse est supérieure à 20kg permet d'éliminer les composantes hautes fréquences des vibrations lors du déplacement le long de la trajectoire de mesure, ce qui accroît la précision de la mesure du diamètre,
- commander une seule articulation du robot pour déplacer la pièce le long de la trajectoire de mesure permet de diminuer les vibrations, ce qui accroît la précision de la mesure du diamètre,
- déduire les grandeurs qui sont fonctions du diamètre par traitement d'images permet de mesurer avec une grande précision ces grandeurs et rend le procédé insensible à des petites erreurs de positionnement des capteurs par rapport à un plan parallèle à la piste circulaire,
- utiliser un robot dont l'erreur statique est strictement supérieure à la précision de la mesure souhaitée simplifie la mise en oeuvre du procédé car celui-ci ne nécessite pas l'utilisation d'un robot complexe et coûteux.

L'invention a également pour objet un système de mesure du diamètre d'une piste circulaire d'une pièce tel que défini dans la revendication 6. Ce système comporte :
- au moins un capteur propre à mesurer, sans contact avec la pièce, lors du déplacement de la pièce le long d'une trajectoire de mesure, une grandeur fonction du diamètre de la piste circulaire, et
- un processeur propre à déterminer le diamètre de la piste circulaire à partir des grandeurs mesurées en plusieurs points de mesure le long de la trajectoire de mesure,
- un robot articulé formé d'une embase fixe supportant un bras manipulateur articulé autour d'au moins deux axes, l'extrémité du bras manipulateur étant équipée d'un organe de préhension propre à saisir la pièce, ce robot étant apte à déplacer la pièce le long de la trajectoire de mesure, et
- au moins un contrôleur apte à mettre en oeuvre le procédé de mesure ci-dessus.

L'invention a également pour objet une chaîne de montage d'une pièce présentant une piste circulaire, tel que defini dans la revendication 7, cette chaîne de montage comportant :
- un poste amont d'approvisionnement automatique en pièces à monter,
- un système de mesure du diamètre de la piste circulaire de la pièce à monter, et
- un poste aval de traitement de la pièce en fonction du diamètre mesuré de la piste circulaire ou de réception de la pièce.

De plus, dans cette chaîne de montage, le système de mesure est celui décrit ci-dessus et le robot utilisé dans le système de mesure est également apte à transférer automatiquement la pièce du poste amont vers le système de mesure et du système de mesure vers le poste aval sans intervention humaine et sans lâcher la pièce.

Cette chaîne de montage présente l'avantage suivant :
- utiliser le robot du système de mesure pour le transfert automatique des pièces du poste amont vers le poste aval rend la chaîne de montage plus rapide car le robot n'a pas à lâcher la pièce lors de la mesure du diamètre de la piste circulaire.

Les modes de réalisation de la chaîne de montage peuvent comporter une ou plusieurs des caractéristiques suivantes :
- le poste de traitement est un poste d'assemblage de la pièce avec des pièces complémentaires sélectionnées en fonction du diamètre mesuré ;
- la pièce est une bague d'un roulement à billes comportant une piste circulaire destinée à recevoir les billes et dans laquelle les pièces complémentaires sont l'ensemble des billes reçues dans la piste circulaire et l'autre bague du roulement.

L'invention sera mieux comprise à la lecture de la description qui va suivre, donnée uniquement à titre d'exemple non limitatif et faite en se référant aux dessins sur lesquels :
- la figure 1 est une illustration schématique d'une chaîne de montage d'un roulement à billes,
- la figure 2 est une illustration schématique d'un système de mesure du diamètre d'une piste circulaire mis en oeuvre dans la chaîne de montage de la figure 1,
- la figure 3 est une illustration schématique en perspective d'une moitié de bague extérieure d'un roulement à billes monté à l'aide de la chaîne de montage de la figure 1,
- la figure 4 est une illustration schématique en vue de dessus d'une tête de mesure utilisée dans le système de la figure 2,
- la figure 5 est une illustration schématique des images filmées par le système de la figure 2,
- la figure 6 est un procédé de montage d'un roulement à billes à l'aide de la chaîne de montage de la figure 1,
- les figures 7A et 7B sont des vues en perspective de deux moitiés de bagues équipées chacune de pistes circulaires dont les diamètres sont susceptibles d'être mesurés à l'aide du système de la figure 2, et
- la figure 8 est une illustration schématique en perspective d'un mode de réalisation dans lequel le système de la figure 2 est adapté pour mesurer le diamètre d'une piste circulaire à l'extérieur d'une bague.

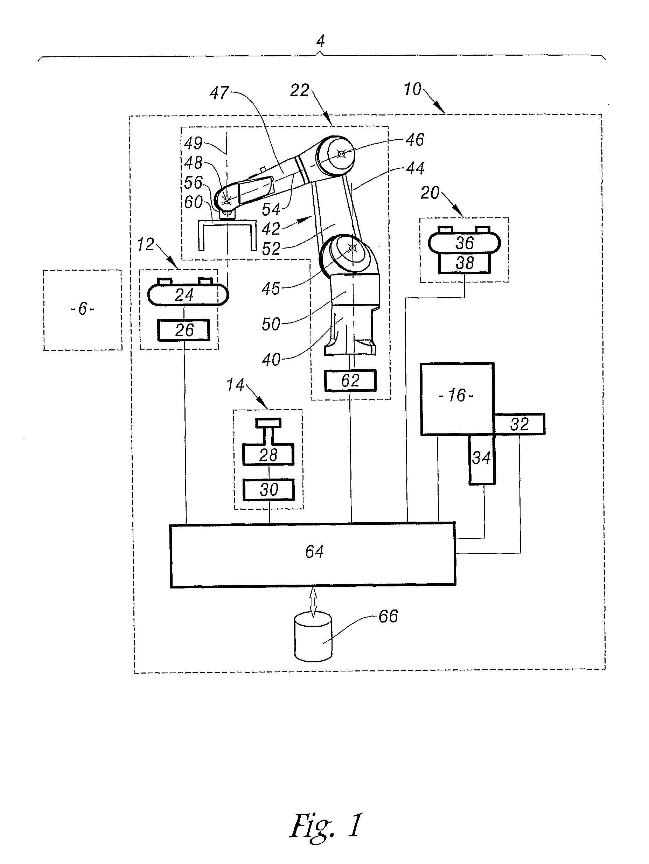

La figure 1 représente une chaîne 4 de montage automatisée d'un roulement à billes. Dans la suite de cette description, les caractéristiques et fonctions bien connues de l'homme du métier ne seront pas décrites en détail.

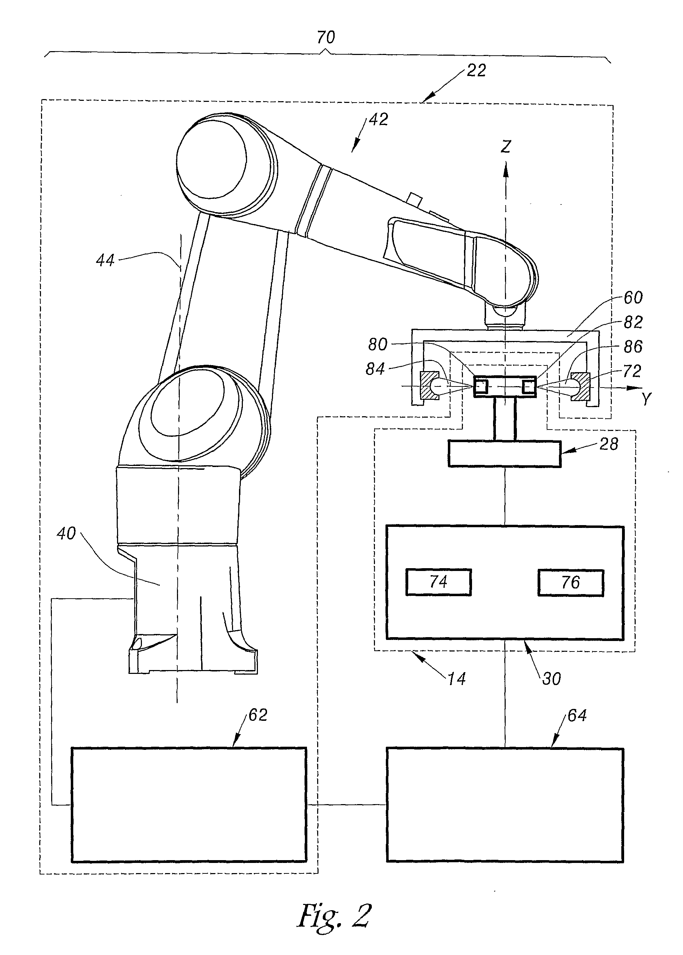

La chaîne de montage 4 comporte une succession de cellules automatisées propres chacune à réaliser des opérations spécifiques de montage. Pour simplifier la figure 2, seule une cellule 6 de fabrication d'une bague extérieure du roulement à billes et une cellule 10 d'assemblage du roulement à billes ont été représentées. La cellule 6 est conventionnelle et ne sera pas décrite plus en détail.

La cellule 10 comprend :
- un poste 12 d'approvisionnement automatique de la cellule 10 en bagues extérieures,
- un poste 14 de mesure du diamètre d'une piste de roulements aménagée sur la bague extérieure,
- un poste 16 d'assemblage de la bague extérieure avec des billes du roulement à billes et une bague intérieure,
- un poste 18 d'assemblage de la bague intérieure du roulement,
- un poste 20 d'évacuation des roulements assemblés vers d'autres cellules de la chaîne de montage 4, et
- un robot 22 apte à déplacer la bague extérieure du poste 12 au poste 20 en passant, dans l'ordre, par les postes 14 et 16 sans lâcher la bague extérieure.

Le poste 12 est, par exemple, formé d'un tapis roulant 24 propre à amener les bagues extérieures à proximité du robot 22 et d'un contrôleur 26 de ce tapis roulant.

Le poste 14 est équipé d'une tête 28 de mesure du diamètre de la piste de roulement et d'un contrôleur 30 propre à commander la tête de mesure.

Le poste 16 est accouplé fonctionnellement, respectivement, à un dispositif 32 d'approvisionnement en billes et à un dispositif 34 d'approvisionnement en bagues intérieures.

Le poste 20 est, par exemple, formé d'un tapis roulant 36 propre à évacuer de la cellule 10 les roulements à billes assemblés, et d'un contrôleur 38 d'évacuation propre à commander le tapis 36.

Le robot 22 est formé d'une embase fixe 40 et d'un bras manipulateur 42 supporté par l'embase 40.

Le bras 42 est articulé autour d'au moins deux axes et sa masse est supérieure à 20 kg. La précision statique des déplacements du robot est supérieure à 1/100mm et typiquement supérieure à 3/100mm. Comparé à la précision de la mesure du diamètre que l'on souhaite obtenir qui est inférieure à 10µm et de préférence inférieure ou égale à 1µm, cette précision statique est au moins dix fois supérieure à la précision souhaitée sur la mesure du diamètre.

On suppose ici que l'embase 40 est fixée sans aucun degré de liberté à un plan horizontal.

Ici, le bras 42 est articulé autour de six axes de rotation 44 à 49. L'axe 44 est un axe vertical solidaire de l'embase 40 et autour duquel pivote un premier segment 50 du bras 42.

L'axe 45 est un axe horizontal fixé au segment 50 et autour duquel pivote un deuxième segment 52 du bras 42.

L'axe 46 est également un axe horizontal fixé à une extrémité du segment 52 et autour duquel pivote un troisième segment 54 du bras 42.

L'axe 47 est un axe longitudinal au segment 54 et coupe l'axe 46 à angle droit. Le segment 54 tourne autour de cet axe 47.

L'axe 48 est un axe perpendiculaire à l'axe 47 fixé à l'extrémité du segment 54 et autour duquel pivote un quatrième segment 56 du bras 42.

Enfin, l'axe 49 est un axe fixé au segment 56 et autour duquel pivote un organe de préhension disposé à l'extrémité du bras 42. Ici cet organe est une pince 60 apte à saisir une bague extérieure et, en alternance, à la relâcher.

Les déplacements du bras autour de ces différents axes sont commandés par un contrôleur 62 de robot.

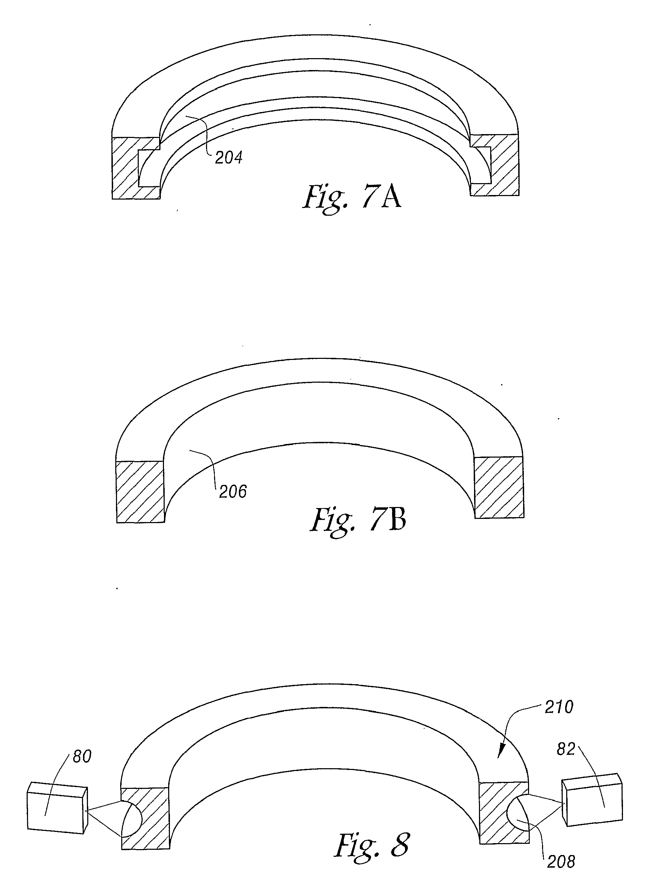

La cellule 10 comprend également un contrôleur 64 de cellules propre à commander les différents postes de travail de cette cellule afin d'assembler un roulement à billes. A cet effet, le contrôleur 64 est connecté à chacun des contrôleurs 26, 30, 38 et 62 ainsi qu'au poste 16 et aux dispositifs d'approvisionnement 32 et 34. Le contrôleur 64 est, par exemple, réalisé à partir d'un calculateur électronique programmable apte à commander l'exécution du procédé de la figure 7. A cet effet, le contrôleur 64 est connecté à une mémoire 66 comportant des instructions pour l'exécution du procédé de la figure 7, lorsque ces instructions sont exécutées par le calculateur électronique.

La figure 2 représente un système 70 de mesure du diamètre d'une piste circulaire d'une bague extérieure 72 assemblée dans la cellule 10. Sur la figure 2, les éléments déjà décrits en regard de la figure 1 portent les mêmes références numériques.

Ce système 70 comprend le robot 22, le poste de mesure 14 ainsi que, éventuellement, le contrôleur 64 de la cellule.

Comme illustré ici plus en détail, le robot 22 est apte à positionner la bague 72 autour de la tête de mesure 28 et à déplacer cette bague 72 lors de la mesure.

Le contrôleur 30 comprend une unité de commande 74 de la tête de mesure 28 ainsi qu'un processeur 76 de traitement des images acquises par la tête 28.

La tête 28 est équipée de deux sources 80 et 82 de lumière collimatée propres chacune à projeter un motif lumineux sur la piste de la bague 72. Les sources produisent donc chacune un faisceau d'ondes dont le front d'ondes est plan. Ici, ces sources 80 et 82 produisent, respectivement, des faisceaux lumineux plans 84 et 86. Par « faisceau lumineux plan », on désigne ici un faisceau de lumière propre à projeter un trait lumineux dont la largeur est faible devant la longueur. Par exemple, la largeur du trait lumineux est dix fois plus petite que la longueur, lorsque ce faisceau est dirigé sur un plan perpendiculaire à sa direction de propagation. Les traits lumineux obtenus s'étendent parallèlement à un axe vertical Z solidaire de la tête 28.

Ici, les sources 80 et 82 sont, par exemple, des sources de faisceaux monochromatiques cohérents tels que des lasers.

Les sources 80 et 82 sont disposées symétriquement de part et d'autre de l'axe Z.

Les directions de propagation des faisceaux 84 et 86 sont colinéaires avec un axe Y et perpendiculaire à l'axe Z. Les directions de propagation des faisceaux 84 et 86 sont opposées.

Le plan défini par les axes Y et Z est appelé par la suite « plan de mesure ».

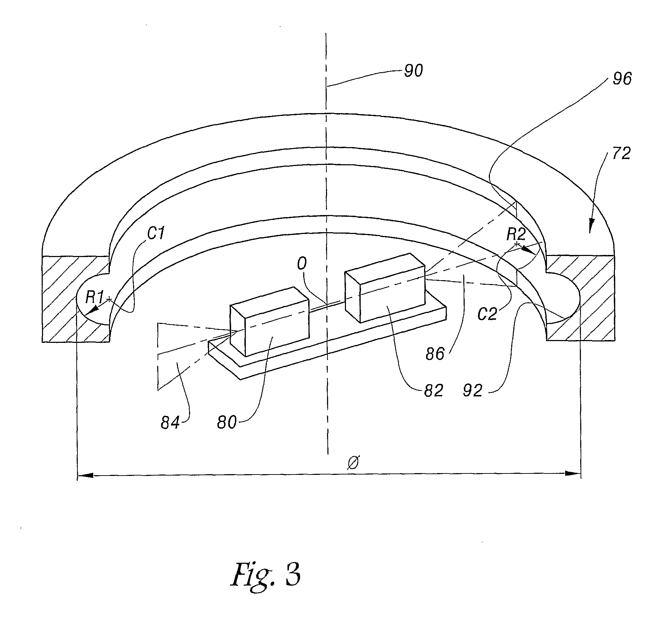

La figure 3 représente plus en détail la bague 72 ainsi que le positionnement des sources 80 et 82 vis-à-vis de cette bague. Dans la figure 3, l'axe de révolution 90 de la bague 72 est vertical.

Une piste 92 de roulement est creusée dans la circonférence intérieure de la bague 72. Cette piste 92 est toroïdale. Elle est, ici, destinée à recevoir les billes du roulement à billes qui doit être assemblé.

La section de la piste 92 dans un plan horizontal forme un cercle dont le centre O se situe sur l'axe de révolution 90.

Le diamètre *Φ* de la piste 92 est mesuré de fond de piste à fond de piste.

La section verticale de cette piste 92 dans le plan de mesure forme deux arcs de cercle de part et d'autre de l'axe Z.

Comme illustré plus en détail dans le cas de la source 82, le faisceau 86 coupe la piste 92. Ainsi, un trait lumineux 96 se forme à l'intersection du plan de mesure et de la piste 92. Le plan de mesure est parallèle à l'axe 90.

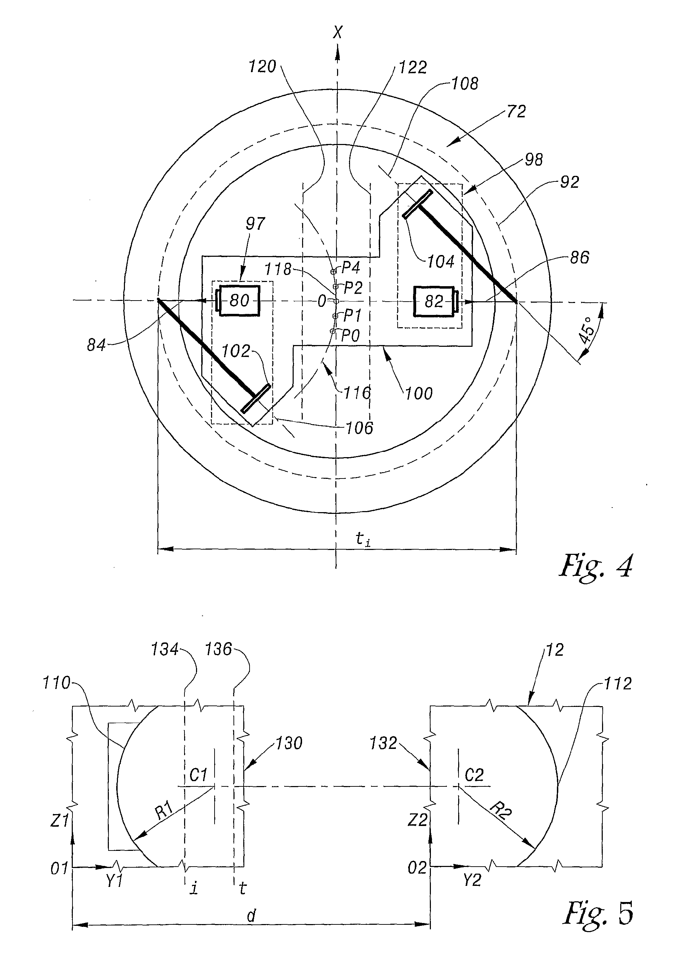

La figure 4 représente en vue de dessus la tête de mesure 28 disposée à l'intérieur de la bague 72 dans le cas particulier où l'axe de révolution 90 est confondu avec l'axe Z de la tête 28.

La tête de mesure comprend deux capteurs 97 et 98 propres chacun à mesurer la distance qui les sépare du fond de la piste 92. Ces capteurs 97 et 98 sont fixés sans aucun degré de liberté à un support 100.

Plus précisément, ces capteurs 97 et 98 sont formés, ici, par l'association des sources 80 et 82 avec respectivement des caméras 102 et 104 aptes à filmer chacune le trait lumineux résultant de l'intersection des faisceaux 84 et 86 avec la piste 92.

Dans la suite de cette description, le centre et le rayon de l'arc de cercle de l'image de la réflexion du faisceau sur la portion de piste situés à gauche de l'axe Z sont notés respectivement C1 et R1. Le centre et le rayon de l'arc de cercle de l'image de la réflexion du faisceau sur la portion de piste situés à droite de l'axe Z sont quant à eux notés respectivement C2 et R2.

A cet effet, les caméras 102 et 104 sont équipées de lignes de visée, respectivement 106 et 108 dirigées vers la piste 92 et orientées dans l'espace de manière à couper les faisceaux 84 et 86 au niveau de la piste 92. Ces lignes de visée 106 et 108 doivent former un angle non nul avec la direction Y de manière à ce que les traits lumineux filmés produisent des arcs de cercle, respectivement 110 et 112 (figure 5) dans les images filmées par les caméras 102 et 104. A titre d'exemple, l'angle entre la direction Y et les lignes de visée 106 et 108 est supérieur à 30° et de préférence égal à 45° dans le plan formé par les axes X et Y. L'axe X est l'axe orthogonal aux axes Y et Z.

Les caméras 102 et 104 sont fixées sans degré de liberté au support 100.

A titre d'exemple, les caméras 102 et 104 sont des capteurs CCD (Charge-Couple Device).

Lors de la mesure du diamètre *Φ*, la bague 72 est déplacée le long d'un trajet circulaire 116 dont le centre est situé sur l'axe 44. Ce trajet 116 appartient au plan X, Y et comporte :
- un point P0 à plus de 1 millimètre en dessous de l'axe Y,
- un point P1 situé, par exemple, à 0,5 millimètres en dessous de l'axe Y,
- un point P2 situé à 0,5 millimètres au-dessus de l'axe Y, et
- un point P4 situé, par exemple, à 1 millimètre au-dessus de l'axe Y.

La section du trajet 116 comprise entre les point P1 et P2 forme une trajectoire de mesure 118. La trajectoire 118 est choisie pour que l'axe 90 passe au travers du plan de mesure au cours du déplacement de la bague 72.

Des limites 120 et 122 parallèles à l'axe Y définissent entre elles une zone à l'intérieur de laquelle le centre O de la bague 72 doit être maintenu pour que les images acquises par les caméras 102 et 104 restent nettes et pleinement exploitables par le système de mesure.

La distance tᵢ correspond à la distance de fond de piste à fond de piste dans le plan de mesure.

La figure 5 représente des images 130 et 132 acquises respectivement par les caméras 102 et 104. La position d'un pixel dans l'image 130 est repérée dans un référentiel orthonormé ayant une origine 01 et des axes Y1, Z1 respectivement alignés sur les axes Y et Z.

De façon similaire, la position d'un pixel de l'image 132 est repérée dans un référentiel orthonormé ayant une origine 02 et des axes Y2, Z2 alignés respectivement sur les axes Y et Z.

La distance d entre les origines O1 et O2 est fixe car les caméras 102 et 104 sont fixées au même support rigide 100. Cette distance d est connue. Par exemple, la distance d est déterminée expérimentalement à l'aide d'une bague étalon ou d'autres moyens.

L'arc de cercle 110 a comme centre le point C1 et a comme rayon le rayon R1.

L'arc de cercle 112 a comme centre le centre C2 et comme rayon le rayon R2.

Les limites 120 et 122 correspondent dans l'image 130 à des limites 134 et 136 à l'intérieur desquelles doit se situer le point C1 pour garantir que l'image acquise est nette et que son traitement s'effectue dans de bonnes conditions.

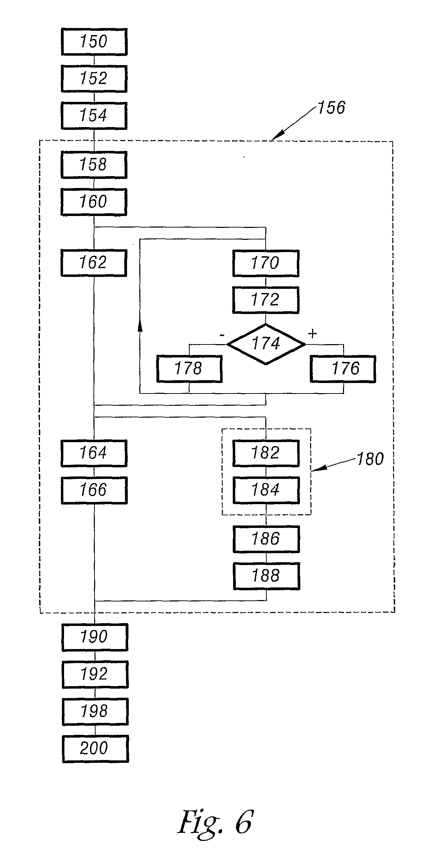

Le fonctionnement de la chaîne de montage 4 va maintenant être décrit en regard du procédé de la figure 6.

Ici, le procédé de montage d'un roulement à billes débute par une étape 150 de fabrication de la bague extérieure 72 par la cellule 6.

Ensuite, lors d'une étape 152, le poste 12 transporte automatiquement la bague 72 de la cellule 6 jusqu'à un point où elle peut être agrippée par le robot 22. Une fois sur ce point, lors d'une étape 154, le robot 22 saisit la bague 72 avec sa pince 60 puis la transporte jusqu'au poste de mesure du diamètre *Φ*. Débute alors une phase 156 de mesure de ce diamètre *Φ*. Au début de la phase 156, lors d'une étape 158, le robot 22 place la bague 72 pour que le centre 0 soit confondu avec la position PO.

Ensuite, le robot déplace continûment la bague 72 de manière à ce que le centre O parcourt le trajet 116 du point P0 vers le point P4. Plus précisément, lors d'une étape 160, le robot 22 accélère le déplacement de la bague 72 sur la portion du trajet comprise entre les points P0 et P1 de manière à ce que la bague 72 atteigne une vitesse prédéterminée.

Ensuite, lors du parcours de la trajectoire 118 entre les points P1 et P2, lors d'une étape 162, le robot 22 est commandé de manière à ce que le déplacement de la bague 72 s'effectue sur cette portion de la trajectoire 116 avec une vitesse instantanée constante.

Une fois arrivée au point P2, lors d'une étape 164, le robot 22 décélère le mouvement de la bague 72 de manière à ce que celle-ci s'immobilise au niveau du point P4.

Tout le long des étapes 160, 162 et 164, seule l'articulation du robot 22 permettant de pivoter autour de l'axe 44 est commandée.

Lorsque le point P4 a été atteint, le robot 22 transporte alors, lors d'une étape 166, la bague 72 jusqu'au poste d'assemblage 16.

En parallèle à l'étape 162, lors d'une étape 170, les caméras 104 et 106 acquièrent simultanément les images 130 et 132.

Ensuite, la distance tᵢ est calculée par triangulation. Par exemple, lors d'une l'étape 172, la position des points C1 et C2 dans les images 130 et 132 ainsi que la valeur des rayons R1 et R2 sont calculées à partir de la forme des arcs de cercle 110 et 112. A cet effet, une méthode des moindres carrés peut être utilisée.

A ce stade là, lors d'une étape 174, le processeur 76 vérifie si les coordonnées du point C1 sont comprises entre les limites 134 et 136. Dans l'affirmative, lors d'une étape 176, le processeur 76 calcule la distance tᵢ à partir de la position des points C1 et C2, de la valeur des rayons R1 et R2 déterminée lors de l'étape 172 et de la valeur de la distance d. Lors de l'étape 176, la valeur de la distance tᵢ est enregistrée.

Si le point C1 n'est pas situé entre les limites 134 et 136, lors d'une étape 178, l'unité 74 via le contrôleur 64 provoque un déplacement de la bague 72 le long de la direction Y pour ramener le centre O entre les limites 120 et 122. Lors de cette étape 178, le contrôleur 62 commande un déplacement du bras 42 en fonction de la position du point C1 mesurée lors de l'étape 172.

A l'issue de l'étape 176 ou de l'étape 178, le procédé retourne à l'étape 170.

Les étapes 170 à 178 sont réitérées plusieurs fois et à intervalle de temps régulier pendant le parcours de la trajectoire 118. Par exemple, la trajectoire 118 comporte plus de cent points de mesure et, de préférence, plus de cent vingt points de mesure. Les points de mesure sont les endroits où les mesures de la distance tᵢ sont réalisées.

Ici, les mesures de la distance tᵢ sont uniquement réalisées sur la trajectoire 118. Dès lors, en parallèle aux étapes 164 et 166, le processeur 76 exécute une étape 180 d'analyse de la cohérence des distances tᵢ mesurées destinée à éliminer les valeurs atypiques mesurées. De telles valeurs atypiques peuvent être causées par la présence de poussières ou d'autres polluants sur la surface de la piste 92. Par exemple, au début de l'étape 180, le processeur 76 calcule, lors d'une opération 182, le diamètre *Φ* à partir de toutes les distances tᵢ mesurées et d'informations représentatives de la distance séparant chaque point de mesure. Par exemple, le processeur 76 détermine par la méthode des moindres carrés l'équation du cercle qui approxime le mieux l'évolution des distances tᵢ en fonction des points de mesure. La valeur du diamètre recherchée est le maximum de la courbe qui peut se situer entre deux points de mesures et qui permet de le calculer avec précision. Ici, l'approximation circulaire sera d'autant plus juste que les mesures seront effectuées à intervalles de temps constants, c'est-à-dire que la vitesse de déplacement de la pièce sera constante.

Lors de l'opération 182, le processeur 76 calcule également l'écart type des distances mesurées tᵢ par rapport à la distance théorique t'ᵢ qui aurait dû être mesurée, cette distance théorique étant obtenue à partir du diamètre *Φ* précédemment calculé. Ensuite, lors d'une opération 184, le processeur 76 élimine les distances mesurées tᵢ qui sont situées à plus de deux écarts types de la valeur théorique correspondante qui aurait dû être mesurée.

A l'issue de l'étape 180, lors d'une étape 186, le processeur 76 détermine une nouvelle fois le diamètre *Φ* en utilisant à cet effet uniquement les mesures qui n'ont pas été éliminées lors de l'étape 180. La méthode mise en oeuvre pour calculer le diamètre *Φ* lors de l'étape 186 est, par exemple, la même que celle mise en oeuvre lors de l'opération 182. La phase 156 s'achève alors.

Une fois le diamètre *Φ* mesuré, lors d'une étape 190, le contrôleur 64 commande le poste 16 en fonction de ce diamètre *Φ* mesuré.

En réponse à ces commandes, lors d'une étape 192, le poste 16 sélectionne les billes ayant un diamètre adapté au diamètre *Φ* mesuré puis assemble ces billes et les bagues extérieure et intérieure.

Une fois le roulement à billes assemblé, lors d'une étape 198, le robot 22 transporte le roulement à billes assemblé jusqu'au poste 20. Lors d'une étape 200, le poste 20 évacue le roulement à billes assemblé vers d'autres cellules de la chaîne de montage.

A partir de l'étape 154, jusqu'à l'étape 198, le robot 22 ne lâche jamais la bague 72, ce qui permet d'accélérer considérablement l'assemblage d'un roulement à billes.

De nombreux autres modes de réalisation sont possibles. Par exemple, les capteurs 97, 98 peuvent être réalisés à partir d'autres technologies que celles mettant en oeuvre des faisceaux de lumière collimatée. Par exemple, des capteurs à ultrason pourraient être utilisés.

Il n'est pas nécessaire que les images soient acquises à intervalles de temps réguliers. Il n'est pas non plus nécessaire que la vitesse instantanée lors du parcours de la trajectoire 118 soit constante. Par contre, l'accélération instantanée doit rester continuellement soit supérieure ou égale à zéro, soit inférieure ou égale à zéro lors du parcours de cette trajectoire 118. Par exemple, en variante, le robot 22 accélère continûment du point P1 au point P2. Dans ces conditions, si l'on souhaite que la distance parcourue par le centre O entre deux instants où des images sont acquises soit constantes, il est nécessaire de raccourcir les intervalles de temps auxquelles sont prises les images au fur et à mesure que la vitesse du centre O augmente.

Ici, le procédé de la figure 6 a été décrit dans le cas particulier où les images acquises par les caméras 102 et 104 sont immédiatement traitées afin d'en déduire la distance tᵢ. En variante, les images sont enregistrées et traitées ultérieurement, par exemple, lorsque le centre O ne parcourt plus la trajectoire 118.

Le système et le procédé décrits ici de mesure peuvent être adaptés pour mesurer le diamètre d'une piste 204 (figure 7A) ayant une section transversale rectangulaire ou le diamètre intérieur d'un cylindre 206 (figure 7B).

Le système et, le procédé décrits ici peuvent également être adaptés pour mesurer le diamètre d'une piste 208 (figure 8) creusée sur la circonférence extérieure d'une bague 210. Par exemple, à cet effet, lors de la mesure du diamètre de la piste, les sources 80 et 82 sont situées à l'extérieur de la bague 210 et non plus à l'intérieur comme dans la figure 4.

Le système et le procédé décrits ici de mesure ne sont pas limités à la mesure de pistes circulaires de bagues mais peuvent également être adaptés pour mesurer le diamètre de tout type de cylindres ou de tubes.

Le diamètre mesuré peut également être utilisé non pas pour apparier des pièces à assembler mais également pour contrôler la qualité de la bague fabriquée. Dans ce cas là, le diamètre mesuré est, par exemple, utilisé pour rebuter les pièces dont le diamètre intérieur mesuré n'est pas compris dans une plage prédéterminée. Le diamètre de la pièce mesuré peut également être simplement mémorisé en vue d'être utilisé dans d'autres étapes ultérieures de fabrication. Dans ce cas là, le poste en aval du système de mesure peut être simplement un poste de réception de la pièce.

La tête de mesure 28 peut comporter plus de deux capteurs. Par exemple, en variante, cette tête de mesure comporte trois capteurs dont les directions de mesure sont décalées les unes par rapport aux autres de 2π/3 radiants.

Le système 4 a été décrit dans le cas particulier où le contrôleur 30 communique avec le contrôleur 62 par l'intermédiaire du contrôleur 64. En variante, le contrôleur 30 est directement relié au contrôleur 62 de manière à communiquer avec ce dernier sans passer par l'intermédiaire du contrôleur de cellules.

Enfin, le gain de temps d'assemblage réalisé en utilisant le même robot pour déplacer la bague le long de la trajectoire de mesure et pour déplacer la pièce d'un poste d'assemblage à un autre, est obtenu même si le robot ne déplace pas la pièce le long de la trajectoire de mesure avec une vitesse instantanée continûment non nulle et une accélération instantanée qui ne change pas de signe. Ainsi, en variante, si seul un gain de temps d'assemblage est recherché sans être accompagné d'une amélioration de la précision de mesure du diamètre de la piste, le système ou le procédé de mesure ne met pas en oeuvre les caractéristiques nécessaires pour accroître la précision de la mesure.

## Revendications

1. Procédé de mesure du diamètre d'une piste circulaire de centre (O) d'une pièce, ce procédé comportant :
a) une étape (162) de déplacement de la pièce le long d'une trajectoire de mesure,
b) lors du déplacement de la pièce le long de la trajectoire de mesure, une étape de mesure (170), sans contact avec la pièce, d'au moins une grandeur fonction du diamètre de la piste circulaire,
c) une étape (186) de détermination du diamètre de la piste circulaire à partir des grandeurs mesurées en plusieurs points de mesure le long de la trajectoire de mesure,
**caractérisé en ce que** :
▪ l'étape a) est réalisée à l'aide d'un robot formé d'une embase fixe et d'un bras manipulateur articulé autour d'au moins deux axes, l'extrémité du bras manipulateur étant équipée d'un organe de préhension propre à saisir la pièce,
▪ lors de l'étape de mesure, au moins deux grandeurs (C1, C2) sont simultanément mesurées à chaque point de mesure le long de la trajectoire de mesure avec une tête de mesure (28) comprenant deux capteurs qui sont disposés de part et d autre d'un axe Z et séparés d'une distance maintenue constante et qui mesurent chacun, selon une direction de mesure (Y1,Y2) perpendiculaire à l'axe Z, une grandeurs (C1 ou C2) représentative de la distance séparant le capteur correspondant de la piste circulaire, les directions de mesure (Y1,Y2) étant opposées et définissant, avec l'axe Z, un plan de mesure,
▪ lors de l'étape a), le robot déplace continûment la pièce de manière que la trajectoire du centre (O) traverse le plan de mesure, et avec une vitesse instantanée qui n'est jamais nulle le long de la trajectoire de mesure et une accélération instantanée qui ne change jamais de signe le long de la trajectoire de mesure.

2. Procédé selon l'une quelconque des revendications précédentes, dans lequel l'étape a) (162) est réalisée à l'aide d'un robot dont la masse du bras articulé est supérieure ou égale à 20 kg.

3. Procédé selon l'une quelconque des revendications précédentes, dans lequel lors de l'étape a) seule une articulation (44) du robot est commandée.

4. Procédé selon l'une quelconque des revendications précédentes, dans lequel l'étape b) est réalisée à l'aide d'au moins un capteur (97, 98) comportant:
- une source (80, 82) d'un faisceau lumineux collimaté propre à projeter un motif lumineux (96) sur la piste circulaire,
- une caméra (102, 104) propre à acquérir une image du motif lumineux projeté sur la piste circulaire, et
- à l'aide d'un processeur (76) propre à traiter les images acquises pour en déduire la grandeur (C1, C2) fonction du diamètre de la piste circulaire.

5. Procédé selon l'une quelconque des revendications précédentes, dans lequel l'étape a) est réalisée avec un bras (42) dont l'erreur statique de positionnement par rapport à une position donnée est strictement supérieure à l'erreur maximale admissible sur la mesure du diamètre de la piste circulaire, l'erreur statique de positionnement étant l'erreur maximale obtenue entre une position cible pour l'organe de préhension et une position à laquelle l'organe de préhension s'arrête réellement lorsque le robot cherche à placer cet organe sur la position cible.

6. Système de mesure du diamètre d'une piste circulaire d'une pièce, ce système comportant :
- au moins un capteur (97, 98) propre à mesurer, sans contact avec la pièce, lors du déplacement de la pièce le long d'une trajectoire (118) de mesure, une grandeur (C1, C2) fonction du diamètre de la piste circulaire, et
- un processeur (76) propre à déterminer le diamètre de la piste circulaire à partir des grandeurs (C1, C2) mesurées en plusieurs points de mesure le long de la trajectoire de mesure,
**caractérisé en ce que** ce système comporte également :
▪ un robot articulé (22) formé d'une embase fixe (40) supportant un bras manipulateur (42) articulé autour d'au moins deux axes, l'extrémité du bras manipulateur étant équipée d'un organe de préhension propre à saisir la pièce, ce robot étant apte à déplacer la pièce le long de la trajectoire de mesure,
▪ une tête de mesure (28) comprenant deux capteurs qui sont disposés de part et d autre d'un axe Z et séparés d'une distance maintenue constante et qui mesurent chacun, selon une direction de mesure (Y1,Y2) perpendiculaire à l'axe Z, une grandeurs (C1 ou C2) représentative de la distance séparant le capteur correspondant de la piste circulaire, les directions de mesure étant opposées et définissant, avec l'axe Z, un plan de mesure, et
▪ au moins un contrôleur (30, 62, 64) apte à mettre en oeuvre un procédé de mesure conforme à l'une quelconque des revendications précédentes.

7. Chaîne de montage d'une pièce présentant une piste circulaire, cette chaîne comportant :
- un poste amont (12) d'approvisionnement automatique en pièces à monter,
- un système (70) de mesure du diamètre de la piste circulaire de la pièce à monter, et
- un poste aval (16) de traitement de la pièce en fonction du diamètre mesuré de la piste circulaire ou de réception de la pièce,
**caractérisée en ce que** le système de mesure est conforme à la revendication 6 et **en ce que** le robot (22) utilisé dans le système de mesure est également apte à transférer automatiquement la pièce du poste amont vers le système de mesure et du système de mesure vers le poste aval sans intervention humaine et sans lâcher la pièce.

8. Chaîne selon la revendication 7, dans laquelle le poste (16) de traitement est un poste d'assemblage de la pièce avec des pièces complémentaires sélectionnées en fonction du diamètre mesuré.

9. Chaîne selon la revendication 8, dans laquelle la pièce est une bague (72) d'un roulement à billes comportant une piste circulaire (92) destinée à recevoir les billes et dans laquelle les pièces complémentaires sont l'ensemble des billes reçues dans la piste circulaire et l'autre bague du roulement.

## Patentansprüche

1. Verfahren zum Messen des Durchmessers einer einen Mittelpunkt (0) aufweisenden Kreis-Laufbahn eines Werkstücks, wobei das Verfahren umfasst:
a) einen Schritt (162) des Bewegens des Werkstücks entlang einer Messstrecke,
b) bei der Bewegung des Werkstücks entlang der Messstrecke einen Schritt des Messens (170) von mindestens einer Größe, welche abhängig vom Durchmesser der Kreis-Laufbahn ist, ohne Kontakt mit dem Werkstück,
c) einen Schritt (186) des Bestimmens des Durchmessers der Kreis-Laufbahn aus den Größen, welche an mehreren Messpunkten entlang der Messstrecke gemessen wurden,
**dadurch gekennzeichnet dass**
• der Schritt a) mit einem Roboter durchgeführt wird, welcher von einem fest angebrachten Sockel und einem Manipulierarm gebildet ist, welcher um mindestens zwei Achsen gelenkig ist, wobei das Ende des Manipulierarms mit einem Greiforgan versehen ist, welches zum Greifen des Werkstücks geeignet ist,
• während des Messschritts mindestens zwei Größen (C1, C2) gleichzeitig an jedem Messpunkt entlang der Messstrecke mit einem Messkopf (28) gemessen werden, welcher zwei Sensoren aufweist, die beiderseits einer Achse Z angeordnet sind und voneinander mit einem konstant gehaltenen Abstand getrennt sind und die jeweils nach einer zur Achse Z senkrechten Messrichtung (Y1, Y2) eine Größe (C1 oder C2) messen, welche repräsentativ für den Abstand zwischen dem korrespondierenden Sensor und der Kreis-Laufbahn ist, wobei die Messrichtungen (Y1, Y2) entgegengesetzt sind und eine Messebene mit der Achse Z definieren,
• während des Schritts a) der Roboter das Werkstück kontinuierlich bewegt, so dass die Strecke des Mittelpunkts (O) die Messebene durchdringt, und mit einer momentanen Geschwindigkeit, die niemals entlang der Messstrecke Null ist, und einer momentanen Beschleunigung, die niemals entlang der Messstrecke ihr Vorzeichen ändert.

2. Verfahren nach einem der vorhergehenden Ansprüche, wobei der Schritt a) (162) mit einem Roboter durchgeführt wird, von dem das Gewicht des gelenkigen Arms größer als oder gleich 20 kg ist.

3. Verfahren nach einem der vorhergehenden Ansprüche, wobei während des Schritts a) ein einzelnes Gelenk (44) des Roboters gesteuert wird.

4. Verfahren nach einem der vorhergehenden Ansprüche, wobei der Schritt b) mit mindestens einem Sensor (97, 98) durchgeführt wird, aufweisend:
- eine Quelle (80, 82) eines kollimierten Lichtstrahls, welcher geeignet ist, ein Lichtmuster (96) auf der Kreis-Laufbahn zu projektieren,
- eine Kamera (102, 104), welche geeignet ist, ein Bild des auf der Kreis-Laufbahn projektierten Lichtmusters zu erfassen, und
- mit einem Prozessor (76), welcher geeignet ist, die erfassten Bilder zu verarbeiten, um die Größe (C1, C2), welche abhängig ist vom Durchmesser der Kreis-Laufbahn, abzuleiten.

5. Verfahren nach einem der vorhergehenden Ansprüche, wobei der Schritt a) mit einem Arm (42) durchgeführt wird, dessen statischer Positionsfehler in Bezug auf eine vorgegebene Position streng größer als der maximal zulässige Fehler in der Messung des Durchmessers der Kreis-Laufbahn ist, wobei der statische Positionsfehler der maximale Fehler ist, der zwischen einer Zielposition des Greiforgans und einer Position, bei der das Greiforgan tatsächlich anhält, erhalten wird, wenn der Roboter versucht, dieses Organ an die Zielposition zu stellen.

6. System zum Messen des Durchmessers einer Kreis-Laufbahn eines Werkstücks, wobei das System aufweist:
- mindestens einen Sensor (97, 98), welcher geeignet ist, bei der Bewegung des Werkstücks entlang einer Messstrecke (118) ohne Kontakt mit dem Werkstück eine Größe (C1, C2) zu messen, welche abhängig vom Durchmesser der Kreis-Laufbahn ist, und
- einen Prozessor (76), welcher geeignet ist, den Durchmesser der Kreis-Laufbahn aus den Größen (C1, C2), welche an mehreren Messpunkten entlang der Messstrecke gemessen werden, zu bestimmen,
**dadurch gekennzeichnet, dass** das System auch aufweist:
- einen Gelenkroboter (22), welcher von einem fest angebrachten Sockel (40) und einem Manipuliersarm (42) gebildet ist, welcher um mindestens zwei Achsen gelenkig ist, wobei das Ende des Handhabungsarms mit einem Greiforgan versehen ist, welches zum Greifen des Werkstücks geeignet ist, wobei der Gelenkroboter geeignet ist, das Werkstück entlang der Messstrecke zu bewegen,
- einen Messkopf (28), welcher zwei Sensoren aufweist, die beiderseits einer Achse Z angeordnet sind und voneinander mit einem konstant gehaltenen Abstand getrennt sind und die jeweils nach einer zur Achse Z senkrechten Messrichtung (Y1, Y2) eine Größe (C1 oder C2) messen, welche repräsentativ für den Abstand zwischen dem korrespondierenden Sensor und der Kreis-Laufbahn ist, wobei die Messrichtungen entgegengesetzt sind und eine Messebene mit der Achse Z definieren, und
- mindestens eine Steuerung (30, 62, 64), welche geeignet ist, ein Messverfahren gemäß einem der vorhergehenden Ansprüche durchzuführen.

7. Fließband für ein Werkstück, welches eine Kreis-Laufbahn aufweist, wobei das Fließband aufweist:
- eine vorgelagerte Station (12) zum automatischen Bereitstellen von zu montierenden Werkstücken,
- ein System (70) zum Messen des Durchmessers der Kreis-Laufbahn des zu montierenden Werkstücks, und
- eine nachgelagerte Station (16) zum Bearbeiten des Werkstücks entsprechend dem gemessenen Durchmesser der Kreisbahn oder zum Empfangen des Werkstücks,
**dadurch gekennzeichnet, dass** das Messsystem dem Anspruch 6 entspricht, und dass der in dem Messsystem verwendete Roboter (22) auch geeignet ist, automatisch das Werkstück von der zuvor gelegenen Station zu dem Messsystem und vom Messsystem zu der nachgelagerten Station zu übertragen, ohne menschliche Intervention und ohne das Werkstück loszulassen.

8. Fließband nach Anspruch 7, wobei die Station (16) zum Bearbeiten eine Station zur Montage des Werkstücks mit komplementären Werkstücken ist, welche gemäß dem gemessenen Durchmesser ausgewählt werden.

9. Fließband nach Anspruch 8, wobei das Werkstück ein Kugellagerring (72) ist, welcher eine Kreis-Laufbahn (92) aufweist, die zur Aufnahme der Kugeln bestimmt ist, und wobei die komplementären Werkstücke die gesamten der in der Kreis-Laufbahn erhaltenen Kugeln und der andere Lagerring sind.

## Claims

1. A method for measuring the diameter of a circular track with a center (O) on a component, this method comprising:
a) a step (162) for moving the component along a measurement trajectory,
b) when the component is moved along the measurement trajectory, a step (170) for measuring, without contact with the component, at least one quantity that is a function of the diameter of the circular track,
c) a step (186) for determining the diameter of the circular track based on the quantities measured at several measurement points along the measurement trajectory,
**characterized in that**
• the step a) is carried out by means of a robot formed from a fixed base and from a manipulator arm articulated about at least two axes, the end of the manipulator arm being equipped with a gripping mechanism capable of grasping and holding the component,
• during the measurement step, at least two quantities (C1, C2) are simultaneously measured at each measurement point along the measurement trajectory, with a measurement head (28) including two sensors which are located on either side of an axis Z and separated by a distance kept constant and which measure each, along a measurement direction (Y1, Y2) perpendicular to the axis Z, a quantity (C1 or C2) representative of the distance which separates the corresponding sensor from the circular track, the measurement directions (Y1, Y2) being opposite and defining, with the axis Z, a measurement plane,
• during the step a), the robot moves the component in a continuous manner in such a way that the trajectory of the center (O) passes through the measurement plane, and with an instantaneous speed which is never zero along the measurement trajectory and an instantaneous acceleration which never changes sign along the measurement trajectory.

2. The method as claimed in any one of the preceding claims, in which the step a) (162) is carried out by means of a robot whose articulated arm has a mass greater than or equal to 20 kg.

3. The method as claimed in any one of the preceding claims, in which, during the step a), only one articulation (44) of the robot is controlled.

4. The method as claimed in any one of the preceding claims, in which the step b) is carried out by means of at least one sensor (97, 98) comprising:
- a source (80, 82) of a collimated light beam for projecting a luminous pattern (96) onto the circular track,
- a camera (102, 104) for acquiring an image of the luminous pattern projected onto the circular track,
and
- by means of a processor (76) for processing the acquired images in order to deduce from these the quantity (C1, C2) that is a function of the diameter of the circular track.

5. The method as claimed in any one of the preceding claims, in which the step a) is carried out with an arm (42) whose static positioning error with respect to a given position is strictly greater than the maximum acceptable error on the measurement of the diameter of the circular track, the static positioning error being the maximum error obtained between a target position for the gripping mechanism and a position at which the gripping mechanism actually stops when the robot tries to place this mechanism on the target position.

6. A system for measuring the diameter of a circular track on a component, this system comprising:
- at least one sensor (97, 98) for measuring, without contact with the component, when the component is moved along a measurement trajectory (118), a quantity (C1, C2) that is a function of the diameter of the circular track, and
- a processor (76) for determining the diameter of the circular track from the quantities (C1, C2) measured at several measurement points along the measurement trajectory,
**characterized in that** this system also comprises:
• an articulated robot (22) formed from a fixed base (40) supporting a manipulator arm (42) articulated about at least two axes, the end of the manipulator arm being equipped with a gripping mechanism for grasping and holding the component, this robot being for moving the component along the measurement trajectory,
• a measurement head (28) including two sensors which are located on either side of an axis Z and separated by a distance kept constant and which measure each, along a measurement direction (Y1, Y2) perpendicular to the axis Z, a quantity (C1 or C2) representative of the distance which separates the corresponding sensor from the circular track, the measurement direction being opposite and defining, with the axis Z, a measurement plane, and
• at least one controller (30, 62, 64) for implementing a measurement method as claimed in any one of the preceding claims.

7. An assembly line for a component having a circular track, this line comprising:
- an upstream station (12) for the automatic supply of components to be assembled
- a system (70) for measuring the diameter of the circular track of the component to be assembled, and
• a downstream station (16) for processing the component according to the measured diameter of the circular track or for receiving the component,
**characterized in that** the measurement system is as claimed in claim 6 and **in that** the robot (22) used in the measurement system is also for automatically transferring the component from the upstream station toward the measurement system and from the measurement system toward the downstream station with no human intervention and without releasing the component.

8. The line as claimed in claim 7, in which the processing station (16) is a station for assembling the component with complementary components selected according to the diameter measured.

9. The line as claimed in claim 7, in which the component is a bearing ring (72) of a ball bearing comprising a circular track (92) designed to receive the balls and in which the complementary components are the set of balls received in the circular track and the other retaining ring of the bearing.
